(19) Europäisches Patentamt / European Patent Office / Office européen des brevets

(11) **EP 3 452 537 B1**

(12) **EUROPEAN PATENT SPECIFICATION**

(45) Date of publication and mention
of the grant of the patent:
**21.08.2024  Bulletin 2024/34**

(51) International Patent Classification (IPC):
**C08J 9/00** (2006.01)      **C08J 9/14** (2006.01)
**C08L 25/04** (2006.01)      **C08L 53/00** (2006.01)

(21) Application number: **17724678.2**

(22) Date of filing: **04.05.2017**

(52) Cooperative Patent Classification (CPC):
(C-Sets available)
**C08J 9/0061; C08J 9/146; C08J 9/149;**
**C08L 25/06;** C08J 2201/03; C08J 2203/162;
C08J 2203/182; C08J 2325/04; C08J 2453/00

(Cont.)

(86) International application number:
**PCT/US2017/031052**

(87) International publication number:
**WO 2017/192846 (09.11.2017 Gazette 2017/45)**

(54) **FOAMING OF STYRENE POLYMER**

SCHÄUMUNG VON STYROLPOLYMER

EXPANSION DE POLYMÈRE STYRÉNIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **06.05.2016  US 201662332605 P**

(43) Date of publication of application:
**13.03.2019  Bulletin 2019/11**

(73) Proprietor: **The Chemours Company FC, LLC
Wilmington DE 19801 (US)**

(72) Inventors:
• **WYSONG, Ernest, Byron
Chadds Ford, PA 19317 (US)**
• **CREAZZO, Joseph, Anthony
Wilmington, DE 19810 (US)**
• **HITCHENS, Bruce, P
Bear, DE 19701 (US)**
• **KONTOMARIS, Konstantinos
Wilmington, DE 19808 (US)**

(74) Representative: **Abitz & Partner et al
Postfach 86 01 09
81628 München (DE)**

(56) References cited:
**EP-A1- 2 706 086          WO-A1-2015/197152
WO-A2-2008/118627**

**(Cont. next page)**

(52) Cooperative Patent Classification (CPC): (Cont.)

C-Sets
**C08L 25/06, C08L 53/00;**
**C08L 25/06, C08L 53/02;**
**C08L 25/06, C08L 53/025**

**Description**

**BACKGROUND INFORMATION**

**Field of the Disclosure**

This invention relates to the foaming of styrene polymer, wherein the blowing agent comprises HFO-Z-1336mzz.

**Description of the Related Art**

WO 2008/1118627 discloses the desire for hydrofluorocarbon blowing agents to have both low ODP (oxygen depletion potential) and GWP (global warming potential). This publication discloses a number of such blowing agents that have an ODP of zero and GWP of less than 50 and which have solubility in alkenyl aromatic polymers, especially polystyrene. HFO-1,1,1,4,4,4-hexafluoro-2-butene is one of the blowing agents disclosed that exhibits these ODP and GWP characteristics. It is known that HFO-1,1,1,4,4,4-hexafluoro-2-butene exists in two isomeric forms, the Z(cis)-isomer and the E(trans)-isomer.

WO 2007/084665 discloses a block copolymer compatibilizer having a first block that is functionally compatible with the thermoplastic resin being foamed, and a second block that is functionally compatible with the blowing agent. In the second full paragraph on p. 5 of this publication, these compatibility aspects are explained in terms of polystyrene being the resin to be foamed, i.e. the block copolymer containing polystyrene for compatibility with the resin and poly(butyl acrylate) for compatibility with HFC-134a blowing agent. Compatibility with the HFC-134a blowing agent is further explained in terms of acrylate polymers being soluble in HFC-134a.

WO 2015/197152 A1 describes a polymeric foam comprising (i) an at least essentially amorphous polymer resin and (ii) a nucleating agent.

EP 2706086 A1 discloses a method of producing foam panels comprising producing a polymer melt of styrene polymer or mixtures of styrene polymers, and introducing 1-12 pts. wt. propellant mixture made of 5-70 wt.% hydrofluorolefins and 95-30 wt.% co-propellant per 100 pts. wt. polymer melt to form a foamable melt.

**SUMMARY**

As part of the present invention, it has been discovered that both Z-1,1,1,4,4,4-hexafluoro-2-butene and E-1,1,1,4,4,4-hexafluoro-2-butene are highly insoluble in molten polystyrene. It has also been discovered that block copolymer increases the solubility of these Z- and E-isomers in molten polystyrene even though these isomers are highly insoluble in the block copolymer.

The insolubility of the Z- and E-isomers by themselves in molten polystyrene can be expressed as the absorption of the isomer in the molten polystyrene. Any absorption of the isomer by the molten polystyrene is measured as weight gain by the polystyrene. Only a very small amount of the isomer is absorbed by the molten polystyrene as indicated by its weight gain being no greater than 8 wt% based on the original weight of the polystyrene by itself and much less as described hereinafter.

These discoveries are embodied in the present invention, which can be described in one embodiment as a process for foaming thermoplastic polymer comprising polystyrene, said process comprising forming a molten foamable composition comprising said thermoplastic polymer, block copolymer, and blowing agent comprising at least one of Z-1,1,1,4,4,4-hexafluoro-2-butene and E-1,1,1,4,4,4-hexafluoro-2-butene, and expanding said foamable composition to obtain as a result thereof foamed thermoplastic polymer, wherein the amount of said block copolymer present in said composition is 5 to 15 wt%, based on the weight of said foamable composition.

The molten foamable composition is preferably in an extruder and the expanding of the molten foamable composition is the result of extruding said composition. Thus the process of the present invention can also be described by the preferred embodiment wherein the process comprises extruding the molten foamable composition comprising molten thermoplastic polymer comprising polystyrene, block copolymer, and blowing agent comprising at least one of Z-1,1,1,4,4,4-hexafluoro-2-butene and E-1,1,1,4,4,4-hexafluoro-2-butene to obtain as a result thereof foamed thermoplastic polymer, wherein the amount of said block copolymer present in said composition is 5 to 15 wt%, based on the weight of said foamable composition.

In both these embodiments, preferred aspects are as follows:
The block copolymer is non-polar. By non-polar is meant that the polarity of the block copolymer is no greater than 1.0 D (Debye). This is in contrast to the poly(butylacrylate)-containing block copolymer of WO 2007/084665, which is polar. By polar is meant that the polarity of the block copolymer is at least 2.0 D. The blowing agent HFC-134a is also polar, in exhibiting a polarity of greater than 2.0 D. In contrast, for example, E-1,1,1,4,4,4-hexafluoro-2-butene is non-polar, in exhibiting a polarity of less than 1.0 D.

The insolubility of the Z-1,1,1,4,4,4-hexafluoro-2-butene and E-1,1,1,4,4,4-hexafluoro-2-butene isomers in the molten thermoplastic polymer is such that the absorption (weight gain) of these isomers in the molten thermoplastic polymer by itself is no greater than 6.0 wt% for the Z-isomer and no greater than 3 wt% for the E-isomer, based on the weight of the foamable composition.

The block copolymer is insoluble in the Z-1,1,1,4,4,4-hexafluoro-2-butene and E-1,1,1,4,4,4-hexafluoro-2-butene. The Z- and E-isomers are highly insoluble in the block copolymer as further described hereinafter.

The thermoplastic polymer comprises polymerized units, at least 60 mol% of which are derived from polymerizing styrene.

These preferred aspects may be used individually or in any combination in the practice of the present invention.

## DETAILED DESCRIPTION

The thermoplastic polymer being foamed according to the present invention comprises polystyrene. The polystyrene can be styrene homopolymer or can contain copolymerized monomer other than styrene. The thermoplastic polymer can also be a blend of polystyrene with other thermoplastic polymer. The other thermoplastic polymer can also be a copolymer of styrene with monomer other than styrene. A preferred monomer other than styrene is acrylonitrile. Preferably any copolymer present in the thermoplastic polymer comprising polystyrene is a random or alternating copolymer, not a block copolymer.

Whether the thermoplastic polymer being foamed is polystyrene or blends of polystyrene with other thermoplastic polymer, styrene is preferably the dominant polymerized monomer (unit) in the thermoplastic polymer being foamed More preferably, the polymerized units of styrene constitute at least 70 mol % or at least 80 mol% or at least 90 mol% or at least 100 mol% of the polymerized monomer units making up the thermoplastic polymer being foamed.

When the thermoplastic polymer contains styrene copolymer, the amount of other monomer copolymerized with the styrene, is such that the styrene content of the copolymer is at least 60 mol% of the copolymer, preferably at least 70 mol%, or at least 80 mol% or at least 90 mol% of the copolymer, based on the total mols (100%) making up the copolymer. This applies whether the styrene copolymer is the only styrene-containing polymer in the thermoplastic polymer or is a blend with other thermoplastic polymer, such as styrene homopolymer or other styrene copolymer.

Preferably, the thermoplastic polymer being foamed is entirely polystyrene homopolymer. When the thermoplastic polymer being foamed is a blend of polystyrene and other thermoplastic polymer as described above, the polystyrene component of this blend is preferably styrene homopolymer constituting at least 80 wt% of the combined weight of polystyrene and other thermoplastic polymer.

The molecular weight of the thermoplastic polymer being foamed is sufficiently high to provide the strength necessary for the requirements of the foam application. Preferably, the Young's modulus of this thermoplastic polymer is at least 15 MPa or this polymer exhibits a melt flow rate of 1 to 50 g/10 min as determined in accordance with ASTM D 1238 at 200°C and using a 5 kg weight on the molten polymer.

The block copolymer used in the present invention comprises a polymer chain formed from of two or more segments of different homopolymers in the polymer chain. The different homopolymers can be two different homopolymers (diblock), three different homopolymers (triblock) or more than three (multiblock) different hompolymer segments. Preferably one of the homopolymer segments is polystyrene. Preferably the other homopolymer segments are at least one of butadiene, butylene, acrylonitrile, ethylene, and isoprene. To exhibit the characteristic of being non-polar, the block copolymer is preferably free of poly(butyl acrylate) segments.

In one embodiment, the amount of block copolymer present in the composition is 6 to 14 wt%. In another embodiment, the amount of block copolymer in the composition is from 7 to 14 wt%. In yet another embodiment, the amount of block copolymer in the compositions is from 7 to 13 wt%. As the amount of block copolymer increases from 13 wt%, the properties of the foamed composition begins to suffer, which is the reason for not exceeding 15 wt% block copolymer in the foamable composition. These amounts of block copolymer are based on the total weight of the foamable composition.

The blowing agent comprising at least one of Z-1,1,1,4,4,4-hexafluoro-2-butene and E-1,1,1,4,4,4-hexafluoro-2-butene can also contain additional ingredients, such as foam cell nucleating agent such as talc and/or co-blowing agent, that are often used in blowing agents for foaming polystyrene. When co-blowing agent is present, the Z-isomer and/or E-isomer content of the blowing agent is preferably at least 50 wt%, more preferably at least 60 wt% or at least 70 wt%, or 80 wt% or at least 90 wt% or at least 100 wt% of the total weight of the blowing agent. The use of co-blowing agent along with E-isomer blowing agent is preferred because of the low solubility of the E-isomer in molten polystyrene. The co-blowing agent should have greater solubility in the molten polystyrene. Examples of co-blowing agent include dimethyl ether and dichloroethylene.

The amount of the Z-isomer, E-isomer, or the combination of Z-and E-isomers in the foamable composition will depend on the density desired upon foaming. Preferably, the amount is effective to obtain a foamed density of at least 30 kg/m$^3$. Generally the amount of blowing agent, preferably being the Z-isomer, the E-isomer, or the combination thereof, will be from 10 to 25 wt% based on the weight of the foamable composition.

The process of the present invention is preferably carried out using an extruder to form the molten foamable composition and to extrude it to form the foamed product. The thermoplastic polymer comprising polystyrene forms the feed to the extruder. The blowing agent is preferably fed into the extruder at a location intermediate the feed and extrusion ends of the extruder, typically into the molten foamable composition that is created as the extrusion screw advances the feeds to the extruder along its length. The other additives to the molten composition are added where convenient and as may be dictated by the state of the additive. For example, solid additives can be conveniently be added to the feed end of the extruder, possibly as a mixture with the polymer feed in particulate form to the extruder. The molten composition within the extruder is extruded through a die, thereby allowing the foamable composition to expand into a foamed product. The foamed product, which can be in such forms as sheet, plank, rod or tube, is then cooled.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus.

The transitional phrase "consisting of" excludes any element, step, or ingredient not specified. If in the claim, such would close the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole. The transitional phrase "consisting essentially of" is used to define a composition, method that includes materials, steps, features, components, or elements, in addition to those literally disclosed provided that these additional included materials, steps, features, components, or elements do not materially affect the basic and novel characteristic(s) of the claimed invention, especially the mode of action to achieve the desired result of any of the processes of the present invention. The term 'consisting essentially of' occupies a middle ground between "comprising" and 'consisting of'.

Where applicants have defined an invention or a portion thereof with an open-ended term such as "comprising," it should be readily understood that (unless otherwise stated) the description should be interpreted to also include such an invention using the terms "consisting essentially of "or "consisting of."

## EXAMPLES

Solubility of Z-1,1,1,4,4,4-hexafluoro-2-butene (Z-1336mzz) and E-1,1,1,4,4,4-hexafluoro-2-butene (E-1336mzz) in molten polystyrene is determined by the following procedure: 78 grams of polystyrene is loaded into a 125 cc stainless steel Parr[©] reactor. The reactor is weighed, mounted to inlet/outlet piping and immersed in an oil bath. An HIP pressure generator (made by High Pressure Equipment Company) is used to load an excess amount of blowing agent into the reactor after it is evacuated. The oil bath is heated to the final temperature (179 °C), at which temperature the polystyrene becomes molten, in about 90 minutes and is kept at the temperature for 30 minutes. The final pressure is recorded, this pressure being analogous to the pressure encountered in an extruder when used in the foaming process. The Parr[©] reactor is removed from the oil bath and cooled down to room temperature. The reactor (with re-solidified polystyrene inside) is weighed after excess (non-dissolved in the polystyrene) blowing agent is vented (E-isomer)/drained (Z-isomer). The weight gain is recorded as solubility according to the following equation:

$$\text{Solubility (wt\%)} = (\text{weight gain} \div 78) \times 100$$

Solubility of the combination of Z-1,1,1,4,4,4-hexafluoro-2-butene and/or E-1,1,1,4,4,4-hexafluoro-2-butene in molten polystyrene plus block copolymer is determined by the same procedure, except the block copolymer is present.

Solubility of the combination of E-1,1,1,4,4,4-hexafluoro-2-butene and co-blowing agent is determined by the same procedure except the co-blowing agent is present in the reactor.

Low weight gain is indicative of the insolubility of the isomer in the molten polystyrene. The weight (wt%) gains by the molten polystyrene reported herein are based on the original weight of the polystyrene.

Solubility of the Z- or E-isomer in the block copolymer is determined by measuring the absorption (weight gain) of the isomer by the block copolymer. The procedure for this measurement is as follows: 10.00 grams of the block copolymer are added to a 100 cc glass bottle with lid. The bottle, lid and contents are weighed, and then 20.00g of blowing agent (Z-isomer or E-isomer) are added, mixed thoroughly, and allowed to sit for 24 hours at under the conditions described below, wherein the blowing agent is in the liquid state. After this time, the copolymer solids are filtered and weighed after excess agent was vented (E-isomer)/drained (Z-isomer). The weight gain is recorded as solubility according to the following equation:

$$\text{Solubility (wt\%)} = (\text{weight gain} \div 10) \times 100.$$

Low weight gain is indicative of the insolubility of the isomer in the block copolymer.

For the Z-isomer, which boils at 33°C (one atm. pressure), the soaking is carried out at ambient temperature (15-25°C). For the E-isomer, which boils at 7.5°C (one atm. pressure), the soaking is conducted at 0°C.

The weight (wet%) gains (solubilty in block copolymer) reported for the absorption of isomer by the block copolymer are also applicable to the thermoplastic polymer comprising polystyrene as described above.

Example 1 - Solubility of 1,1,1,4,4,4-hexafluoro-2-butene in Block Copolymer

The following block copolymers were tested:

1. polystyrene/ethylene ran-butylene available as SA 432431 from Sigma-Aldrich Co. LLC
2. polystyrene/isoprene/butylene (ps content 19 wt%) available as D1171 P from Kraton Polymers LLC
3. polystyrene/isoprene/butylene (ps content 30 wt%) available as FG 1901 from Kraton Polymers LLC

All of these copolymers are non-polar, exhibiting a polarity of less than 1.0 D.

These copolymers in powder form were soaked in liquid Z-1,1,1,4,4,4-hexafluro-2-butene according to the procedure described above. After soaking, all of the copolymers exhibited a weight gain as reported in Table 1.

Table 1- Copolymer Solubility

| Copolymer | Weight Gain (g) |
|-----------|-----------------|
| 1 | 0.32 |
| 2 | 0.28 |
| 3 | 0.20 |

The largest weight gain was 3.2 wt% (calculation: (0.32/10) X 100). The fact that there was no weight loss indicates completely insolubility of the block copolymer in the Z-isomer. The same was true for the E-isomer. Preferably, in the practice of the present invention, the weight gain by either the E-isomer or the Z-isomer will be no greater than 5 wt% of the weight of the block copolymer by itself.

Example 2 - Solubility in Molten Styrene Polymer

The solubility of Z-1336mzz in molten polystyrene was determined according to the procedure described above and found to be 5.7 wt%.

The solubility of E-1336mzz in molten polystyrene was determined according to the procedure described above and found to be 2.4 wt%. No block copolymer is present in the solubility determinations. Solubility of these isomers in molten polystyrene is substantially insensitive to pressure. For example, solubility in molten polystyrene increases from 2.1 wt% at 800 psig (5.5 MPa).to 2.6 wt% at 2600 psig (17.9 Mpa).

Addition of 10 wt% of block copolymer 2 to the composition that is melted to form the molten polystyrene gives the solubility results reported in Table 2. This 10 w% addition is based on the weight of the foamable composition.

Table 2 - Improvement in Isomer Solubility

| Isomer | Solubility (wt%) |
|--------|------------------|
| Z | 7.9 |
| E | 3.2 |

The presence of the block copolymer in the molten polystyrene increases the solubility of the Z- and E-isomers by at least 33%. The pressures existing during the heating of the composition range from 2576 psia (17.6 MPa) to 2770 psia (18.9 MPa).

When copolymer 2 is replaced by copolymer 1 in the same amount and the pressure is 2544 psia (17.4 MPa), the resultant solubility of the Z-isomer is 6.8 wt%.

When copolymer 2 is replaced by copolymer 3 in the same amount and the pressure is 2521 psia (17.2 MPa), the resultant solubility of the Z-isomer is 6.8 wt%.

Example 3 - Addition of Co-blowing Agent

Dimethyl ether (DME) is the co-blowing agent used in this Example. DME is 16.9 wt% soluble in molten polystyrene at 178°C and 1325 psia (9.1 MPa). The arithmetic mean of this solubility and the solubility (2.4 wt%) of E-1336mzz is 9.7 wt%. The actual solubility of a 50:50 weight mixture of the E-isomer and DME is 11.9 wt%, which is greater than expected from the mixture. The solubility of a 87.5:12.5 weight mixture of E-133mzz and DME at 1500 psia (10.3 MPa) was 6.2 wt % compared to a weighted average solubility of the pure components of 4.3 wt %.

The solubility of neat Z-1336mzz, neat dimethyl ether (DME) and of a Z-1336mzz/DME (87.5/12.5wt%) blend in polystyrene homopolymer (with Melt Flow Index of about 5.0) was measured at 179 °C at 1,500 psia (10.3 MPa) according to the method described above. The solubilities of neat HFO-1336mzz(Z) and neat DME were, based on the measurements, 5.5 and 17.9 wt%, respectively. The HFO-1336mzz(Z)/DME (87.5/12.5wt%) blend solubility expected as a weight-fraction weighted average of the solubilities of its neat components would be 7.1 wt%. Surprisingly, the measurements revealed that the HFO-1336mzz(Z)/DME (87.5/12.5wt%) blend solubility at 179 °C and 1,500 psia (10.3 MPa) was 10.2 wt%, i.e. significantly higher than expected.

Example 4 - Solubility of Blends with block copolymers

The solubility of Z-1336mzz and a blend of Z-1336mzz and DME (87.5/12.5 wt %) was determined as described above, at a temperature of 179°C at 3000 psia (20.7 MPa) in polystyrene homopolymer (MFI 5) and in polystyrene with 10 wt % (polystryrene/iosoprene/butylene) block copolymer (block copolymer 3). Results are summarized in Table 3, below.

Table 3

| Blowing Agent | Polymer | Solubility (wt%) |
|---|---|---|
| HFO-1336mzz(Z) neat | Polystyrene Homopolymer (with a MFI of about 5) | 5.9 |
| HFO-1336mzz(Z)/DME (87.5/12.5 wt%) | Polystyrene Homopolymer (with a MFI of about 5) | 12.8 |
| HFO-1336mzz(Z)/DME (87.5/12.5 wt%) | Blend of 90 wt% Polystyrene Homopolymer (with a MFI of about 5) with 10 wt% {Polystyrene(19 wt)/ Isoprene/Butylene} block copolymer (D1171 P from Kraton Polymers) | 14.9 |

Example 5 - Foaming of Polystyrene

The composition being foamed is formed in a twin screw extruder and the foaming occurs upon the composition being extruded.

The extruder is a 30 mm twin screw (ZSK-30) extruder equipped with heaters heating the extruder shell to 200°C through a melting zone, followed by the shell temperature decreasing stepwise from 200°C to 180°C, then from 180°C to 160°C, from 160°C to 140°C, then from 140°C to 120°C, then from 120°C to 110°C, and finally at the 5/16 in (0.79 cm) diameter circular orifice, from 110°C to 100°C. The polystyrene used has a melt flow rate of 6 g/10 min (ASTM D 1238 at 200C and 5 kg weight) and is available as Styrosolution© 1600 from Nova Chemicals. The blowing agent is the described below and is fed into the zone within the extruder where the polystyrene is molten. The rate of feed corresponds to the composition desired within the extruder, i.e. 15 wt% of blowing agent. The block copolymer is copolymer 2 described above and is fed as a mixture with the polystyrene to the extruder. The amount of block copolymer is 10 wt% based on the total weight of the composition within the extruder, including the weight of blowing agent. Included in the mixture is 0.5 wt% talc as a nucleating agent for the foam, based on the total weight of the composition within the extruder, including blowing agent. The pressure within the extruder at the extrusion orifice is 1355 psia (9.3 MPa). The foaming of the composition occurs upon the release of the composition from the pressure within the extruder, as the composition exits the extruder orifice. A smooth foamed extrudate is obtained having a density of 6.5 lb/ft$^3$ (195 kg/m$^3$).

The results of extrusion foaming are as follows: A smooth foamed extrudate is obtained when the blowing agent is Z-isomer when the block copolymer is present in the foamable composition. The same is true when the blowing agent is a 70:30 weight mixture of the E-isomer/trans-1,2-dichloro- ethylene. The smoothness of the foamed extrudate indicates improved solubility of the blowing agent provided by the presence of the block copolymer in the foamable composition.

In contrast when the block copolymer is not added to (present in) the foamable composition, the surface of the extruded foamed extrudate is rough. Similar results are obtained when block copolymers 1 and 3 are substituted for copolymer 2.

**Claims**

1. Process for foaming thermoplastic polymer comprising polystyrene, said process comprising forming a molten foamable composition comprising said thermoplastic polymer, block copolymer, and blowing agent comprising at least one of Z-1,1,1,4,4,4-hexafluoro-2-butene and E-1,1,1,4,4,4-hexafluoro-2-butene and expanding said foamable composition to obtain as a result thereof foamed thermoplastic polymer, wherein the amount of said block copolymer present in said composition is 5 to 15 wt%, based on the weight of said foamable composition.

2. The process of claim 1 wherein said molten foamable composition is in an extruder and said expanding is the result of extruding said composition.

3. The process of claim 1 wherein the block copolymer is a diblock or triblock copolymer of styrene and at least one of butadiene, butylene, acrylonitrile, ethylene, and isoprene.

4. The process of claim 1 wherein said Z-1,1,1,4,4,4-hexafluoro-2-butene and E-1,1,1,4,4,4-hexafluoro-2-butene are highly insoluble in said molten thermoplastic polymer as indicated by a weight gain of no greater than 8 wt% determined as outlined in the introductory part of the chapter titled "Examples" of the description.

5. The process of claim 1 wherein said block copolymer is insoluble in said Z-1,1,1,4,4,4-hexafluoro-2-butene and E-1,1,1,4,4,4-hexafluoro-2-butene.

6. The process of claim 1 wherein said Z-1,1,1,4,4,4-hexafluoro-2-butene and E-1,1,1,4,4,4-hexafluoro-2-butene are highly insoluble in said block copolymer as indicated by a weight gain of no greater than 5 wt% determined as outlined in the introductory part of the chapter titled "Examples" of the description.

7. The process of claim 1 wherein said thermoplastic polymer comprises polymerized monomer units, at least 60 mol% of which are styrene.

8. The process of claim 1, wherein said blowing agent comprises at least one of Z-1,1,1,4,4,4-hexafluoro-2-butene and E-1,1,1,4,4,4-hexafluoro-2-butene and a co-blowing agent selected from the group consisting of dimethyl ether and trans-1,2-dichloroethylene.

9. A foam product comprising: a polymer matrix comprising a thermoplastic material selected from the group consisting of polystyrene, polystyrene copolymers, and blends of polystyrene with other thermoplastic polymers, a block copolymer, and a blowing agent comprising at least one of Z-1,1,1,4,4,4-hexafluoro-2-butene and E-1,1,1,4,4,4-hexafluoro-2-butene, the foam product having a density of less than 50 kg/m$^3$, wherein the amount of said block copolymer present in said composition is 5 to 15 wt%, based on the weight of said foam product composition

10. The foam product of claim 9, wherein the thermoplastic material is polystyrene.

11. The foam product of claim 9, wherein the block copolymer is a diblock or triblock copolymer of styrene and at least one of butadiene, butylene, acrylonitrile, ethylene, and isoprene.

12. The foam product of claim 9, wherein the blowing agent is from 10% to 25% by weight of said foam product composition.

13. The foam product of claim 12, where the blowing agent comprises Z-1,1,1,4,4,4-hexafluoro-2-butene; preferably a mixture of the Z-and the E- isomers and wherein the Z- isomer comprises more than 50% of said blowing agent.

**Patentansprüche**

1. Prozess zur Schäumung von thermoplastischem Polymer umfassend Polystyrol, wobei der Prozess das Bilden einer geschmolzenen schäumbaren Zusammensetzung, die das thermoplastischem Polymer, ein Blockcopolymer und ein Treibmittel umfasst, das mindestens eines von Z-1,1,1,4,4,4-Hexafluor-2-buten und E-1,1,1,4,4,4-Hexafluor-2-buten umfasst, und Expandieren der schäumbaren Zusammensetzung umfasst, um als Ergebnis davon ein geschäumtes thermoplastisches Polymer zu erhalten, wobei die Menge des Blockcopolymers, das in der Zusammensetzung vorliegt, 5 bis 15 Gew.-%, auf das Gewicht der schäumbaren Zusammensetzung bezogen, beträgt.

2. Prozess nach Anspruch 1, wobei die geschmolzene schäumbare Zusammensetzung sich in einem Extruder befindet und das Expandieren die Folge von Extrudierens der Zusammensetzung ist.

3. Prozess nach Anspruch 1, wobei das Blockcopolymer ein Doppelblock- oder Dreifachblockcopolymer von Styrol und mindestens einem von Butadien, Butylen, Acrylnitril, Ethylen und Isopren ist.

4. Prozess nach Anspruch 1, wobei das Z-1,1,1,4,4,4-Hexafluor-2-buten und E-1,1,1,4,4,4-Hexafluor-2-buten in dem geschmolzenen thermoplastischem Polymer äußerst unlöslich sind, wie durch eine Gewichtszunahme von nicht mehr als 8 Gew.-% angezeigt, wie im Einführungsteil des Kapitels mit dem Titel "Beispiele" der Beschreibung skizziert, bestimmt.

5. Prozess nach Anspruch 1, wobei das Blockcopolymer in dem Z-1,1,1,4,4,4-Hexafluor-2-buten und E-1,1,1,4,4,4-Hexafluor-2-buten unlöslich ist.

6. Prozess nach Anspruch 1, wobei das Z-1,1,1,4,4,4-Hexafluor-2-buten und E-1,1,1,4,4,4-Hexafluor-2-buten in dem Blockcopolymer äußerst unlöslich sind, wie durch eine Gewichtszunahme von nicht mehr als 5 Gew.-% angezeigt, wie im Einführungsteil des Kapitels mit dem Titel "Beispiele" der Beschreibung skizziert, bestimmt.

7. Prozess nach Anspruch 1, wobei das thermoplastischem Polymer polymerisierte Monomereinheiten umfasst, von denen mindestens 60 Mol% Styrol sind.

8. Prozess nach Anspruch 1, wobei das Treibmittel mindestens eines von Z-1,1,1,4,4,4-Hexafluor-2-buten und E-1,1,1,4,4,4-Hexafluor-2-buten und ein Co-Treibmittel umfasst, ausgewählt aus der Gruppe bestehend aus Dimethylether und Trans-1,2-dichlorethylen.

9. Schaumprodukt umfassend: eine Polymermatrix umfassend ein thermoplastisches Material ausgewählt aus der Gruppe bestehend aus Polystyrol, Polystyrolcopolymeren und Mischungen von Polystyrol mit anderen thermoplastischem Polymeren, einem Blockcopolymer und einem Treibmittel umfassend mindestens eines von Z-1,1,1,4,4,4-Hexafluor-2-buten und E-1,1,1,4,4,4-Hexafluor-2-buten, wobei das Schaumprodukt eine Dichte von weniger als 50 kg/m$^3$ aufweist,
wobei die Menge des Blockcopolymers, das in der Zusammensetzung vorliegt, 5 bis 15 Gew.-%, auf das Gewicht der Schaumproduktzusammensetzung bezogen, vorliegt.

10. Schaumprodukt nach Anspruch 9, wobei das thermoplastische Material Polystyrol ist.

11. Schaumprodukt nach Anspruch 9, wobei das Blockcopolymer ein Doppelblock- oder ein Dreifachblock-Copolymer von Styrol und mindestens einem von Butadien, Butylen, Acrylnitril, Ethylen und Isopren ist.

12. Schaumprodukt nach Anspruch 9, wobei das Treibmittel 10 bis 25 Gew.-% der Schaumproduktzusammensetzung ist.

13. Schaumprodukt nach Anspruch 12, wobei das Treibmittel Z-1,1,1,4,4,4-Hexafluor-2-buten, bevorzugt eine Mischung der Z- und der E-Isomere umfasst und wobei das Z-Isomer mehr als 50 % des Treibmittels umfasst.

**Revendications**

1. Processus d'expansion d'un polymère thermoplastique comprenant du polystyrène, ledit processus comprenant la formation d'une composition expansible fondue comprenant ledit polymère thermoplastique, un copolymère séquencé, et un agent d'expansion comprenant au moins l'un parmi le Z-1,1,1,4,4,4-hexafluoro-2-butène et le E-1,1,1,4,4,4-hexafluoro-2-butène et l'expansion de ladite composition expansible pour obtenir comme résultat de celui-ci un polymère thermoplastique expansé, dans lequel la quantité dudit copolymère séquencé présent dans ladite composition est de 5 à 15 % en pds, sur la base du poids de ladite composition expansible.

**2.** Processus selon la revendication 1, dans lequel ladite composition expansible fondue se trouve dans une extrudeuse et ladite expansion est le résultat de l'extrusion de ladite composition.

**3.** Processus selon la revendication 1, dans lequel le copolymère séquencé est un copolymère diséquencé ou triséquencé de styrène et d'au moins l'un parmi le butadiène, le butylène, l'acrylonitrile, l'éthylène, et l'isoprène.

**4.** Processus selon la revendication 1, dans lequel lesdits Z-1,1,1,4,4,4-hexafluoro-2-butène et E-1,1,1,4,4,4-hexafluoro-2-butène sont hautement insolubles dans ledit polymère thermoplastique fondu tel qu'indiqué par un gain de poids non supérieur à 8 % en pds déterminé tel que souligné dans la partie introductrice du chapitre intitulé « Exemples » de la description.

**5.** Processus selon la revendication 1, dans lequel ledit copolymère séquencé est insoluble dans lesdits Z-1,1,1,4,4,4-hexafluoro-2-butène et E-1,1,1,4,4,4-hexafluoro-2-butène.

**6.** Processus selon la revendication 1, dans lequel lesdits Z-1,1,1,4,4,4-hexafluoro-2-butène et E-1,1,1,4,4,4-hexafluoro-2-butène sont hautement insolubles dans ledit copolymère séquencé tel qu'indiqué par un gain de poids non supérieur à 5 % en pds déterminé tel que souligné dans la partie introductrice du chapitre intitulé « Exemples » de la description.

**7.** Processus selon la revendication 1, dans lequel ledit polymère thermoplastique comprend des unités monomères polymérisés, dont au moins 60 % en mole sont du styrène.

**8.** Processus selon la revendication 1, dans lequel ledit agent d'expansion comprend au moins l'un parmi le Z-1,1,1,4,4,4-hexafluoro-2-butène et le E-1,1,1,4,4,4-hexafluoro-2-butène et un co-agent d'expansion sélectionné dans le groupe constitué de l'éther de diméthyle et du *trans*-1,2-dichloroéthylène.

**9.** Produit expansé comprenant : une matrice polymère comprenant un matériau thermoplastique sélectionné dans le groupe constitué du polystyrène, des copolymères de polystyrène, et des mélanges de polystyrènes avec d'autres polymères thermoplastiques, un copolymère séquencé, et un agent d'expansion comprenant au moins l'un parmi le Z-1,1,1,4,4,4-hexafluoro-2-butène et le E-1,1,1,4,4,4-hexafluoro-2-butène, le produit expansé ayant une densité inférieure à 50 kg/m$^3$, dans lequel la quantité dudit copolymère séquencé présent dans ladite composition est de 5 à 15 % en pds, sur la base du poids de ladite composition de produit expansé.

**10.** Produit expansé selon la revendication 9, dans lequel le matériau thermoplastique est le polystyrène.

**11.** Produit expansé selon la revendication 9, dans lequel le copolymère séquencé est un copolymère diséquencé ou triséquencé de styrène et d'au moins l'un parmi le butadiène, le butylène, l'acrylonitrile, l'éthylène, et l'isoprène.

**12.** Produit expansé selon la revendication 9, dans lequel l'agent d'expansion représente de 10 % à 25 % en poids de ladite composition de produit expansé.

**13.** Produit expansé selon la revendication 12, où l'agent d'expansion comprend du Z-1,1,1,4,4,4-hexafluoro-2-butène ; préférablement un mélange des isomères Z et E, et dans lequel l'isomère Z comprend plus de 50 % dudit agent d'expansion.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20081118627 A
- WO 2007084665 A

- WO 2015197152 A1
- EP 2706086 A1